# EUROPEAN PATENT APPLICATION

(11) **EP 4 741 143 A1**
(43) Date of publication of application: **13.05.2026**
(21) Application number: 25210978.0
(22) Date of filing: 24.10.2025
(51) Int. Cl.: B29C 70/48, B29C 33/02, B29C 33/26, B29C 33/48, B29C 33/50, B29D 99/00

(54) **METHODS AND TOOLING FOR GAP RESIN INFUSION OF COMPOSITES**

(30) Priority: 07.11.2024 US 202463717666 P; 20.06.2025 US 202519244760
(71) Applicant: The Boeing Company, Arlington, VA 22202 (US)
(72) Inventor: O'BRIEN, Faith, Arlington, VA, 22202 (US); WITT, David Sorensen, Arlington, VA, 22202 (US); BELCHER, Stephen L., Arlington, VA, 22202 (US); CHEN, Daniel Hung Han, Arlington, VA, 22202 (US); HUYNH, Dat Van, Arlington, VA, 22202 (US); HERNANDEZ, Andres, Arlington, VA, 22202 (US)
(74) Representative: Hoffmann Eitle

(57) **Abstract**

Resin infusion tooling systems and methods of resin infusion are presented. A resin infusion tooling system comprises a heating tool bed comprising a plurality of cavities formed between a plurality of bed segments movable relative to each other, and a plurality of seals configured to seal the plurality of bed segments together for resin infusion of a plurality of dry stringer preforms in the plurality of cavities. The plurality of cavities is expandable by movement of the plurality of bed segments relative to each other.

## Description

### CROSS-REFERENCE TO RELATED APPLICATION

This application claims the benefit of U.S. Provisional Patent Application Serial No. 63/717,666, filed November 7, 2024, and entitled "Methods and Tooling for Gap Resin Infusion of Composites," which is incorporated herein by reference in its entirety.

### BACKGROUND INFORMATION

### 1. Field:

The present disclosure relates generally to composite manufacturing and more specifically to methods and tooling for gap resin infusion of composites.

### 2. Background:

To manufacture reinforced composite panels, composite stringers are joined to composite panels. Composite stringers and panels can be presented as prepreg composite materials or dry fiber preforms. The composite stringers are longitudinal components with a cross-section having a C-shape, T-shape, I-shape, or other desirable cross-sectional shape. The thickness of the composite material is substantially less than the length of the composite stringer. The thin composite material in contrast to the length of the composite stringer increases the difficulty of lifting, positioning, and placing the composite stringer into processing tools.

Therefore, it would be desirable to have a method and apparatus that takes into account at least some of the issues discussed above, as well as other possible issues. For example, it would be desirable to provide a method and apparatus for processing composite stringers.

### SUMMARY

An embodiment of the present disclosure provides a resin infusion tooling system. The resin infusion tooling system comprises a heating tool bed comprising a plurality of cavities formed between a plurality of bed segments movable relative to each other, and a plurality of seals configured to seal the plurality of bed segments together for resin infusion of a plurality of dry stringer preforms in the plurality of cavities. The plurality of cavities is expandable by movement of the plurality of bed segments relative to each other.

Another embodiment of the present disclosure provides a resin infusion tooling system. The resin infusion tooling system comprises a heating tool bed comprising a plurality of cavities configured to support a plurality of dry stringer preforms during resin infusion, and a number of inserts configured to receive the plurality of dry stringer preforms and hold the plurality of dry stringer preforms within the plurality of cavities.

Still another embodiment of the present disclosure provides a method of performing resin infusion. Blades of a plurality of dry stringer preforms are placed into a plurality of cavities between a plurality of bed segments of a heating tool bed. The plurality of bed segments of the heating tool bed are moved towards each other to contract the plurality of cavities. A panel preform is placed over the plurality of dry stringer preforms and in contact with bases of the plurality of dry stringer preforms. A tool lid is sealed to the heating tool bed to form a resin infusion chamber. The plurality of dry stringer preforms and the panel preform are resin infused to form a reinforced panel.

Yet another embodiment of the present disclosure provides a method of performing resin infusion. Blades of a plurality of dry stringer preforms are placed into a number of inserts. The blades of the plurality of dry stringer preforms are positioned within a plurality of cavities of a heating tool bed using the number of inserts. A panel preform is placed over the plurality of dry stringer preforms on the heating tool bed such that the panel preform is in contact with bases of the plurality of dry stringer preforms. A tool lid is sealed to the heating tool bed to form a resin infusion chamber. The plurality of dry stringer preforms and the panel preform are resin infused to form a reinforced panel.

A further embodiment of the present disclosure provides a method of performing resin infusion. Blades of a plurality of dry stringer preforms are placed into a number of inserts. The blades of the plurality of dry stringer preforms are positioned within a plurality of cavities of a heating tool bed using the number of inserts. A panel preform is placed over the plurality of dry stringer preforms on the heating tool bed such that the panel preform is in contact with bases of the plurality of dry stringer preforms. The plurality of dry stringer preforms and the panel preform are resin infused to form a reinforced panel. The reinforced panel is removed from the heating tool bed by removing the reinforced panel from the number of inserts.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives, and features thereof will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a manufacturing environment in accordance with an illustrative embodiment;
**Figure 3** is an illustration of a cross-sectional view of a resin infusion tooling system comprising a heating tool bed with a plurality of bed segments in accordance with an illustrative embodiment;
**Figure 4** is an illustration of a cross-sectional view of a resin infusion tooling system in an open position in accordance with an illustrative embodiment;
**Figure 5** is an illustration of a cross-sectional view of a resin infusion tooling system receiving dry stringer preforms in accordance with an illustrative embodiment;
**Figure 6** is an illustration of a cross-sectional view of a resin infusion tooling system during resin infusion in accordance with an illustrative embodiment;
**Figure 7** is an illustration of an isometric view of a seal on a bed segment in accordance with an illustrative embodiment;
**Figure 8** is an illustration of a cross-sectional view of a resin infusion tooling system comprising a heating tool bed with a plurality of bed segments in accordance with an illustrative embodiment;
**Figure 9** is an illustration of a cross-sectional view of a resin infusion tooling system comprising a heating tool bed with a plurality of bed segments in accordance with an illustrative embodiment;
**Figure 10** is an illustration of a cross-sectional view of a resin infusion tooling system in an open position in accordance with an illustrative embodiment;
**Figure 11** is an illustration of a cross-sectional view of a resin infusion tooling system receiving dry stringer preforms in accordance with an illustrative embodiment;
**Figure 12** is an illustration of a cross-sectional view of a resin infusion tooling system during resin infusion in accordance with an illustrative embodiment;
**Figure 13** is an illustration of a cross-sectional view of a resin infusion tooling system while a reinforced panel is removed in accordance with an illustrative embodiment;
**Figure 14** is an illustration of a cross-sectional view of a resin infusion tooling system comprising a number of inserts in accordance with an illustrative embodiment;
**Figure 15** is an illustration of a cross-sectional view of a resin infusion tooling system comprising a number of inserts receiving dry stringer preforms in accordance with an illustrative embodiment;
**Figure 16** is an illustration of a cross-sectional view of a resin infusion tooling system during resin infusion in accordance with an illustrative embodiment;
**Figure 17** is an illustration of a cross-sectional view of a resin infusion tooling system comprising a number of inserts in accordance with an illustrative embodiment;
**Figure 18** is an illustration of a cross-sectional view of a resin infusion tooling system comprising a number of inserts in accordance with an illustrative embodiment;
**Figure 19** is an illustration of a cross-sectional view of a resin infusion tooling system comprising a number of inserts in accordance with an illustrative embodiment;
**Figure 20** is an illustration of a cross-sectional view of an insert of a resin infusion tooling system in accordance with an illustrative embodiment;
**Figure 21** is an illustration of a cross-sectional view of an insert of a resin infusion tooling system in accordance with an illustrative embodiment;
**Figure 22** is an illustration of a cross-sectional view of a resin infusion tooling system comprising a number of inserts in accordance with an illustrative embodiment;
**Figure 23** is an illustration of a cross-sectional view of a resin infusion tooling system comprising a number of inserts in accordance with an illustrative embodiment;
**Figure 24** is a flowchart of a method of performing resin infusion in accordance with an illustrative embodiment;
**Figure 25** is a flowchart of a method of performing resin infusion in accordance with an illustrative embodiment;
**Figure 26** is an illustration of an aircraft manufacturing and service method in a form of a block diagram in accordance with an illustrative embodiment; and
**Figure 27** is an illustration of an aircraft in a form of a block diagram in which an illustrative embodiment may be implemented.

### DETAILED DESCRIPTION

The illustrative examples recognize and take into account several considerations. The illustrative examples recognize and take into account that current automated high rate resin infusion processes have two sided net shape tooling for a structural panel with stringers. The illustrative examples recognize and take into account that conventional two-sided net shape tooling for a structural panel includes insertion of a dry fiber preform of the stringer into a narrow slot of a heated tool. The illustrative examples recognize and take into account that this insertion process has been shown to affect part quality and generate inconsistencies in the part. The illustrative examples recognize and take into account that the insertion process can cause tooling abrasion.

The illustrative examples recognize and take into account that existing methods to address the insertion process are to over consolidate stringer preforms. However, over-consolidation can cause volume fraction issues and resin flow issues. The illustrative examples recognize and take into account that existing methods to address the insertion process are to design a stringer slot with a larger slot and draft angle. However, a larger slot and draft angle could cause volume fraction issues and added post cure manufacturing process to remove excess resin.

The illustrative examples present a method for adjustable net part matched tooling for a gap resin infusion process of composites. Methods and tooling concepts are described in the illustrative examples that allow control and adjustability of tooling surfaces with complex geometry to be integrated into an automated high rate resin infusion process for sustainable composite structures.

The illustrative examples present control and adjustability of tooling surfaces. The control and adjustability of tooling surfaces provides flexibility of the tool to account for variability of dry fiber preform shape and automated placement tool tolerances to enable automated high-rate manufacturing of composites. Some of the illustrative examples present an adjustable tooling solution to open narrow tooling gaps prior to dry fiber preform insertion and close to net shape. In some illustrative examples, the cavities in the heating tool bed are expanded to receive the dry stringer preforms. In some illustrative examples, a number of inserts are provided. In some illustrative examples, the number of inserts receive the dry stringer preforms. In some illustrative examples, the number of inserts hold the dry stringer preforms in the plurality of cavities of the heating tool bed. In some illustrative examples, the number of inserts is opened to ease placement of the plurality of dry stringer preforms.

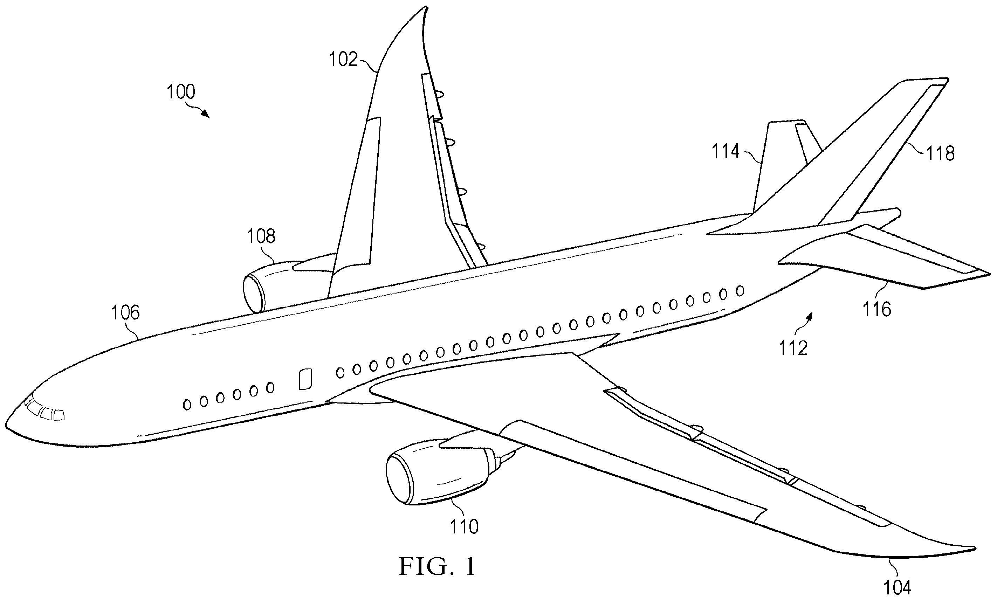

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have reinforced composite panels manufactured according to the illustrative examples. Aircraft **100** is an example of an aircraft that can have resin infused parts formed using the illustrative examples.

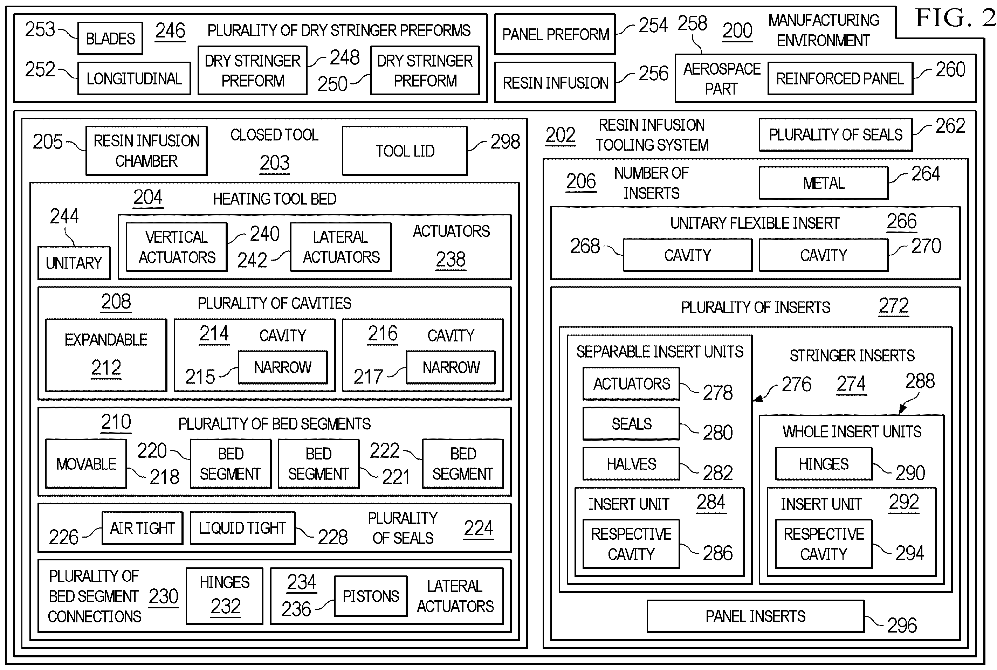

Turning now to **Figure 2****,** an illustration of a block diagram of a manufacturing environment is depicted in accordance with an illustrative embodiment. In manufacturing environment **200,** resin infusion tooling system **202** is used to perform resin infusion **256** on panel preform **254** and plurality of dry stringer preforms **246** to form reinforced panel **260.** Reinforced panel **260** can be a part of aircraft **100** of **Figure 1****.**

Resin infusion tooling system **202** comprises closed tool **203** with resin infusion chamber **205** formed by tool lid **298** and heating tool bed **204.** Heating tool bed **204** comprises plurality of cavities **208** configured to receive plurality of dry stringer preforms **246.** More specifically, plurality of cavities **208** is configured to receive blades **253** of plurality of dry stringer preforms **246.** Plurality of dry stringer preforms **246** are longitudinal **252** components. As a result, blades **253** of plurality of dry stringer preforms **246** are very narrow compared to a length of plurality of dry stringer preforms **246.** Plurality of cavities **208** at net shape are undesirably narrow for automated insertion of blades **253** of plurality of dry stringer preforms **246.**

In some illustrative examples, panel preform **254** is placed into contact with bases of plurality of dry stringer preforms **246.** When plurality of dry stringer preforms **246** has a T-shaped cross-section, the bases are opposite blades **253.** When blades **253** are placed into plurality of cavities **208,** blades **253** may be considered "facing down" while the bases are considered "facing up".

In some illustrative examples, resin infusion tooling system **202** comprises heating tool bed **204** comprising plurality of cavities **208** formed between plurality of bed segments **210** movable relative to each other, and plurality of seals **224** configured to seal plurality of bed segments **210** together for resin infusion **256** of plurality of dry stringer preforms **246** in plurality of cavities **208.** In some illustrative examples, plurality of cavities **208** is expandable **212** by movement of plurality of bed segments **210** relative to each other.

When plurality of bed segments **210** are movable **218,** plurality of bed segments **210** are connected by plurality of bed segment connections **230.** In some illustrative examples, plurality of bed segments **210** are movable **218** in a single axis. In some illustrative examples, resin infusion tooling system **202** comprises lateral actuators **234** configured to move plurality of bed segments **210** laterally relative to each other. In some illustrative examples, plurality of bed segments **210** are movable **218** laterally by lateral actuators **234.** In some illustrative examples, lateral actuators **234** comprise pistons **236.**

In some illustrative examples, plurality of bed segments **210** are movable **218** in more than one axis. In some of these illustrative examples, resin infusion tooling system **202** comprises hinges **232** connecting plurality of bed segments **210** to enable fanning movement of plurality of bed segments **210** relative to each other.

To place plurality of dry stringer preforms **246** into plurality of cavities **208** when plurality of cavities **208** is expandable **212,** plurality of bed segments **210** are initially moved away from each other.

In this illustrative example, plurality of bed segments **210** comprises bed segment **220,** bed segment **221,** and bed segment **222.** Cavity **214** is formed between bed segment **220** and bed segment **221.** Cavity **216** is formed between bed segment **221** and bed segment **222.** Cavity **214** is narrow **215** in a net shape prior to expansion. Cavity **216** is narrow **217** in a net shape prior to expansion.

In this illustrative example, dry stringer preform **248** will be placed into cavity **214.** In this illustrative example, dry stringer preform **250** will be placed into cavity **216.**

After receiving plurality of dry stringer preforms **246** in plurality of cavities **208,** plurality of bed segments **210** is moved towards each other. Moving plurality of bed segments **210** towards each other decreases the size of plurality of cavities **208.** Moving plurality of bed segments **210** towards each other seals plurality of bed segments **210** to each other using plurality of seals **224.** Plurality of seals **224** are both airtight **226** and liquid tight **228** to allow for pulling a vacuum and for resin infusion **256.**

Utilizing closed tool **203** comprising plurality of bed segments **210** and plurality of seals **224** generates aerospace part **258** having a desired quality of resin infusion **256.** Plurality of seals **224** enables use of plurality of bed segments **210** to create expandable **212** plurality of cavities **208.**

In some illustrative examples, resin infusion tooling system **202** comprises number of inserts **206** configured to receive plurality of dry stringer preforms **246** and hold plurality of dry stringer preforms **246** within plurality of cavities **208.** Number of inserts **206** can comprise any desirable quantity of inserts. In this illustrative example, number of inserts **206** is used in conjunction with expandable **212** plurality of cavities **208.** In some illustrative examples, actuators **238** are present to actuate number of inserts **206** relative to heating tool bed **204.** In some illustrative examples, actuators **238** comprise at least one of vertical actuators **240** or lateral actuators **242** to move number of inserts **206** relative to plurality of bed segments **210.** In some illustrative examples, actuators **238** can be used to expand cavities of number of inserts **206.** In some illustrative examples, actuators **238** can be used to lift number of inserts **206** away from heating tool bed **204.**

In some illustrative examples, resin infusion tooling system **202** comprises heating tool bed **204** comprising plurality of cavities **208** configured to support plurality of dry stringer preforms **246** during resin infusion **256,** and number of inserts **206** configured to receive plurality of dry stringer preforms **246** and hold plurality of dry stringer preforms **246** within plurality of cavities **208.** Number of inserts **206** comprises any quantity of inserts. In some illustrative examples, number of inserts **206** comprises unitary flexible insert **266.** In this illustrative example, unitary flexible insert **266** comprises cavity **268** and cavity **270** configured to receive dry stringer preform **248** and dry stringer preform **250.** In these illustrative examples, portion of unitary flexible insert **266** with cavity **268** is placed into cavity **214** and portion of unitary flexible insert **266** with cavity **270** is placed into cavity **216.** In some illustrative examples, number of inserts **206** comprises unitary flexible insert **266** with cavities configured to slide into plurality of cavities **208** of heating tool bed **204.**

In some illustrative examples, number of inserts **206** comprises plurality of inserts **272** comprising stringer inserts **274.** In some illustrative examples, each insert unit of stringer inserts **274** has a respective cavity configured to receive a dry stringer preform of plurality of dry stringer preforms **246.** In some illustrative examples, stringer inserts **274** comprises separable insert units **276.** In some illustrative examples, separable insert units **276** comprise actuators **278** to move halves **282** of separable insert units **276** relative to each other. By actuating a separable insert unit of separable insert units **276,** the two halves of the respective separable insert unit are moved towards or away from each other. Seals **280** are present to seal halves **282** of separable insert units **276** to enable resin infusion **256.**

For example, insert unit **284** comprises respective cavity **286.** Respective cavity **286** is expandable by moving halves **282** of insert unit **284** away from each other. Seals **280** seal halves **282** of insert unit **284** together. In this illustrative example, stringer inserts **274** comprise separable insert units **276** with halves **282** separable from each other.

In some illustrative examples, stringer inserts **274** comprise whole insert units **288** with respective cavities expandable by hinges **290.** For example, insert unit **292** comprises respective cavity **294** expandable by a hinge of hinges **290.** In some illustrative examples, stringer inserts **274** comprise whole insert units **288** expandable by the flexible material forming whole insert units **288.**

In some illustrative examples, plurality of inserts **272** further comprises panel inserts **296.** In these illustrative examples, panel inserts **296** are positioned between stringer inserts **274.** In some illustrative examples, each stringer insert **274** is independently actuated relative to heating tool bed **204** by actuators **238.** In some illustrative examples, each panel insert of panel inserts **296** is independently actuated using actuators **238** relative to heating tool bed **204.** In some illustrative examples, plurality of inserts comprise panel inserts **296** positioned between stringer inserts **274** and configured to support panel preform **254** positioned over stringer inserts **274** and panel inserts **296.**

In some illustrative examples, plurality of seals **262** is present in resin infusion tooling system **202** to seal number of inserts **206** to each other. In some illustrative examples, plurality of seals **262** is present in resin infusion tooling system **202** to seal number of inserts **206** to heating tool bed **204.**

In some illustrative examples, number of inserts **206** are used in conjunction with unitary **244** heating tool bed **204.** In some illustrative examples, unitary **244** heating tool bed **204** comprises a single non-moving bed. In some illustrative examples, plurality of cavities **208** are non-net shape and rigid. In some illustrative examples, plurality of cavities **208** are sized to receive number of inserts **206** so that cavities in number of inserts **206** are net shape when inserted into plurality of cavities **208.** In some illustrative examples, plurality of cavities **208** are expandable **212** and number of inserts **206** adjustable so that cavities in number of inserts **206** are net shape when inserted into plurality of cavities **208.**

The illustration of manufacturing environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, plurality of cavities **208** can include more than two cavities. As another example, plurality of seals **224** can include any desirable quantity and positioning of seals. In some illustrative examples, plurality of seals **224** can include unitary seals that extend to seal tool lid **298** to a bed segment and seal multiple bed segments to each other.

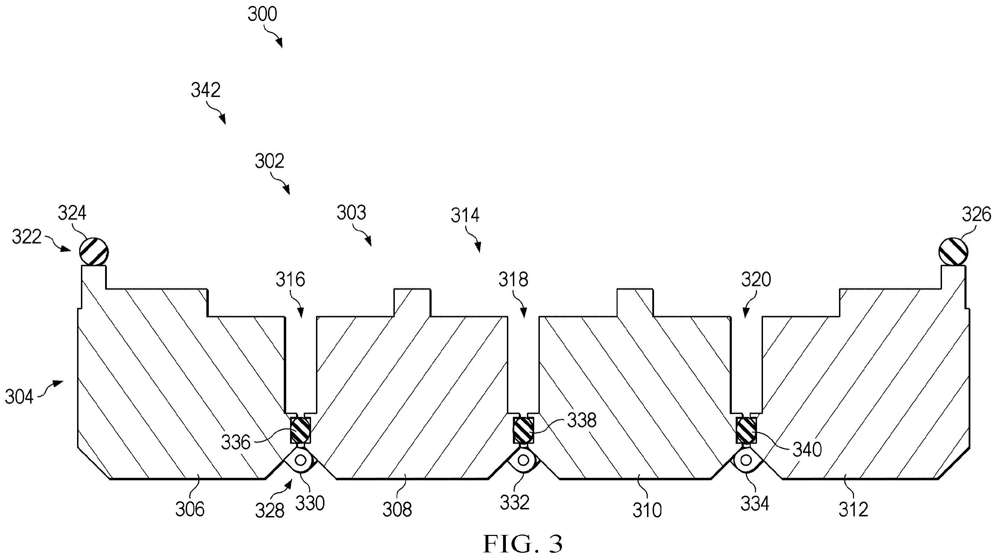

Turning now to **Figure 3****,** an illustration of a cross-sectional view of a resin infusion tooling system comprising a heating tool bed with a plurality of bed segments is depicted in accordance with an illustrative embodiment.

Portions of resin infusion tooling system **302** are depicted in view **300.** Resin infusion tooling system **302** comprises heating tool bed **303.** Heating tool bed **303** comprises plurality of bed segments **304.** In this illustrative example, plurality of bed segments **304** comprises bed segment **306,** bed segment **308,** bed segment **310,** and bed segment **312.** Plurality of cavities **314** is formed by plurality of bed segments **304.** Plurality of cavities **314** comprises cavity **316,** cavity **318,** and cavity **320.**

Plurality of seals **322** is present in resin infusion tooling system **302** to cause heating tool bed **303** to be airtight and liquid tight for resin infusion. Plurality of seals **322** comprises seal **324** and seal **326** configured to seal plurality of bed segments **304** to a tooling lid. Plurality of seals **322** comprises seal **336,** seal **338,** and seal **340** configured to seal plurality of bed segments **304** to each other. In some illustrative examples, a unitary seal can form portions of a seal between plurality of bed segments **304** and the tooling lid. For example, in some illustrative examples, a unitary seal can form portions of seal **324** and seal **336.** In one illustrative example, a unitary seal can form portions of seal **326** and seal **340.**

Plurality of bed segments **304** are configured to move relative to each other to adjust plurality of cavities **314.** In this illustrative example, plurality of bed segments **304** is connected by plurality of hinges **328.** Plurality of hinges **328** comprises hinge **330,** hinge **332,** and hinge **334.** Hinge **330** connects bed segment **306** and bed segment **308.** Hinge **332** connects bed segment **308** and bed segment **310.** Hinge **334** connects bed segment **310** and bed segment **312.** Plurality of hinges **328** enable movement of plurality of bed segments **304** in a plurality of axes. Plurality of hinges **328** enable movement of plurality of bed segments **304** in a fan-like motion.

In view **300,** plurality of bed segments **304** are in closed configuration **342.** In this illustrative example, closed configuration **342** provides plurality of cavities **314** with a net shape.

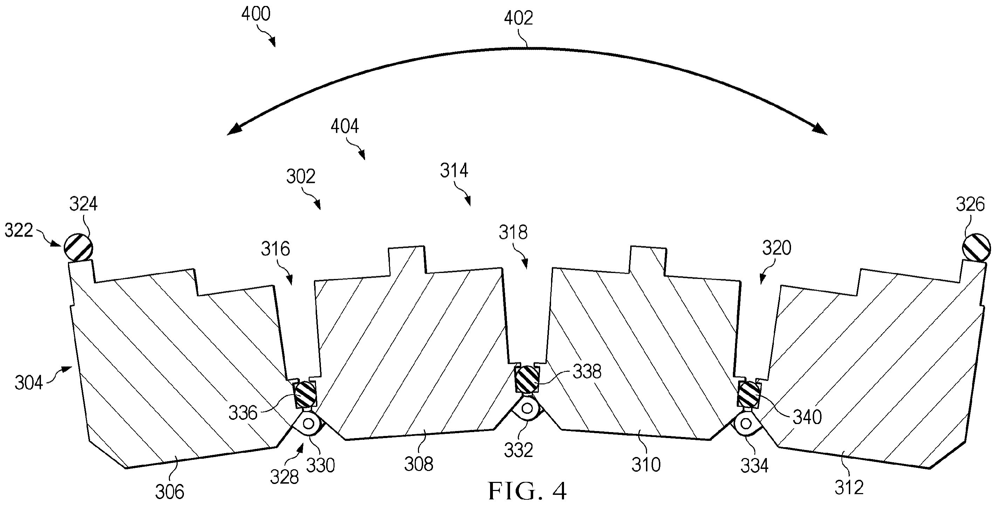

Turning now to **Figure 4****,** an illustration of a cross-sectional view of a resin infusion tooling system in an open position is depicted in accordance with an illustrative embodiment. In view **400,** plurality of bed segments **304** have moved in fan movement **402.** By moving plurality of bed segments **304** in fan movement **402,** heating tool bed **303** is in open configuration **404.** In open configuration **404** plurality of cavities **314** has expanded from closed configuration **342** of view **300.** Each of cavity **316,** cavity **318,** and cavity **320** has expanded to more easily receive a respective dry stringer preform.

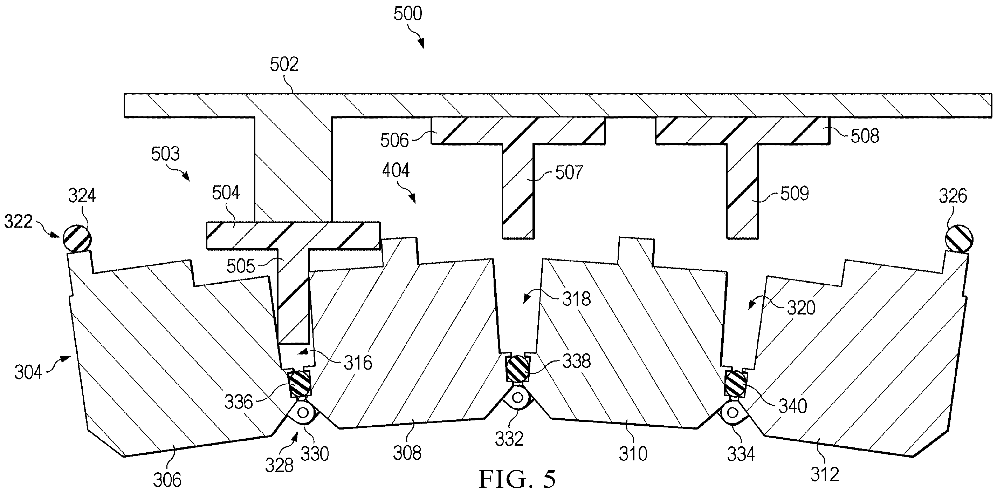

Turning now to **Figure 5****,** an illustration of a cross-sectional view of a resin infusion tooling system receiving dry stringer preforms is depicted in accordance with an illustrative embodiment. In view **500,** plurality of bed segments **304** is in open configuration **404** and plurality of dry stringer preforms **503** is being placed into plurality of cavities **314.** In this illustrative example, blade **505** of dry stringer preform **504** is being placed into cavity **316.** In this illustrative example, blade **507** of dry stringer preform **506** is positioned to be placed into cavity **318.** In this illustrative example, blade **509** of dry stringer preform **508** is positioned to be placed into cavity **320.**

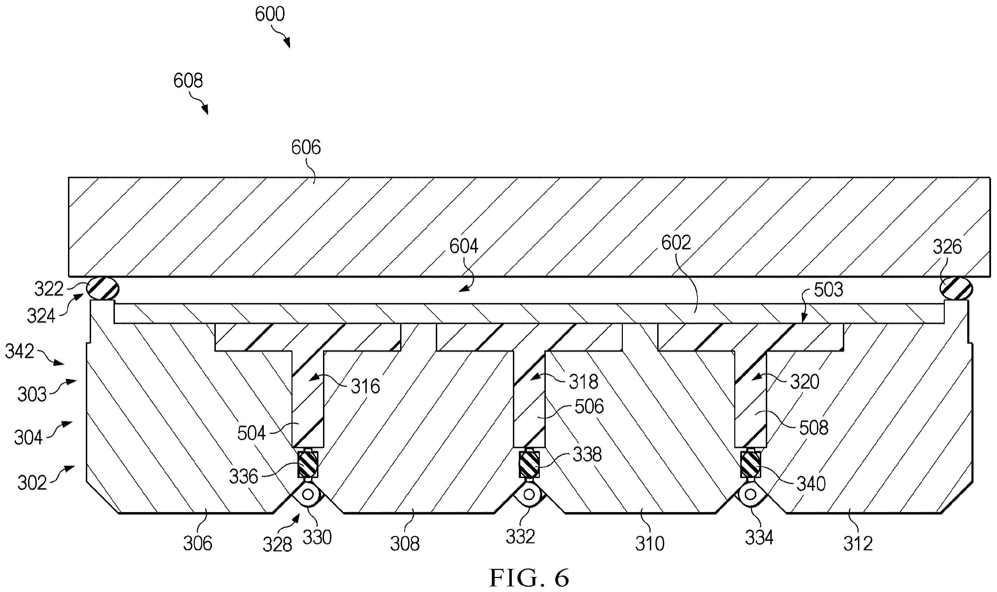

Turning now to **Figure 6****,** an illustration of a cross-sectional view of a resin infusion tooling system during resin infusion is depicted in accordance with an illustrative embodiment. In view **600,** resin infusion is being performed on plurality of dry stringer preforms **503.** Panel preform **602** is positioned over and in contact with plurality of dry stringer preforms **503.**

Tool lid **606** is sealed to heating tool bed **303** by seal **324** and seal **326.** Sealing tool lid **606** to heating tool bed **303** forms resin infusion chamber **604.** Resin infusion chamber **604** contains panel preform **602** and plurality of dry stringer preforms **503.** By resin infusing panel preform **602** and plurality of dry stringer preforms **503,** a reinforced panel is formed.

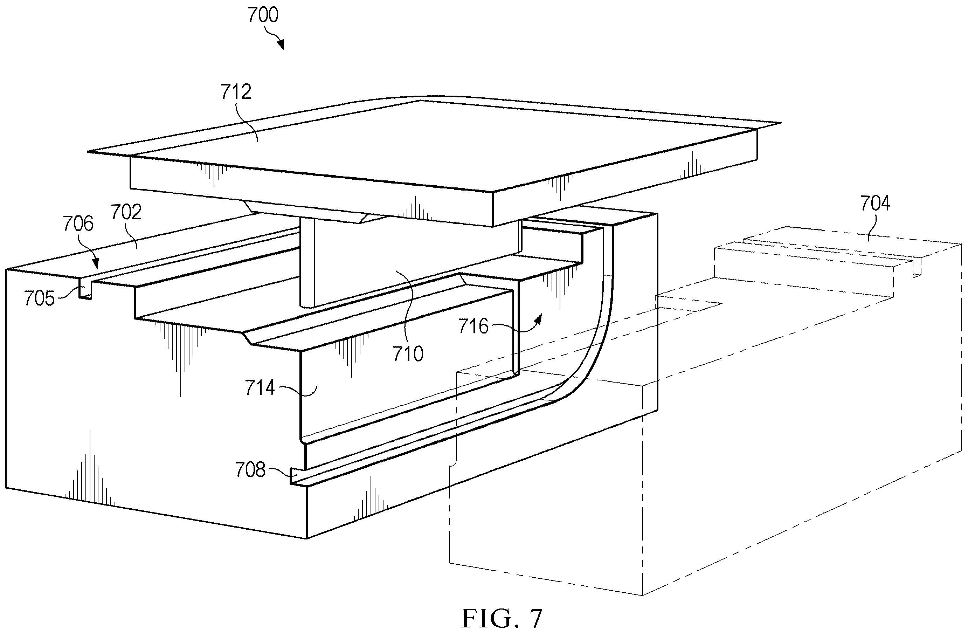

Turning now to **Figure 7****,** an illustration of an isometric view of a seal on a bed segment is depicted in accordance with an illustrative embodiment. View **700** is an isometric view of bed segment **702** and bed segment **704.** Bed segment **702** and bed segment **704** will be moved towards each other to form a net shape cavity to process dry stringer preform **710.** Seal groove **705** is visible in view **700.** A seal will be placed into seal groove **705** prior to processing. Seal groove **705** comprises top seal region **706** and cavity seal region **708.** Top seal region **706** will seal a tool lid against bed segment **702.** Cavity seal region **708** will seal bed segment **702** to bed segment **704.** Cavity seal region **708** extends below net shape surface **714** which will form part of the net shape cavity between bed segment **702** and bed segment **704.** Net shape surface **714** will contact a blade of dry stringer preform **710.**

Flash region **716** is positioned between net shape surface **714** and seal groove **705.** A difference between flash region **716** and net shape surface **714** is sufficient to maintain the flash on the reinforced panel product. The flash present on the reinforced panel will be removed in post processing. Having sufficiently sized flash to remain on the reinforced panel can mitigate breakage or debris left in the tool due to flash after reinforced panel removal.

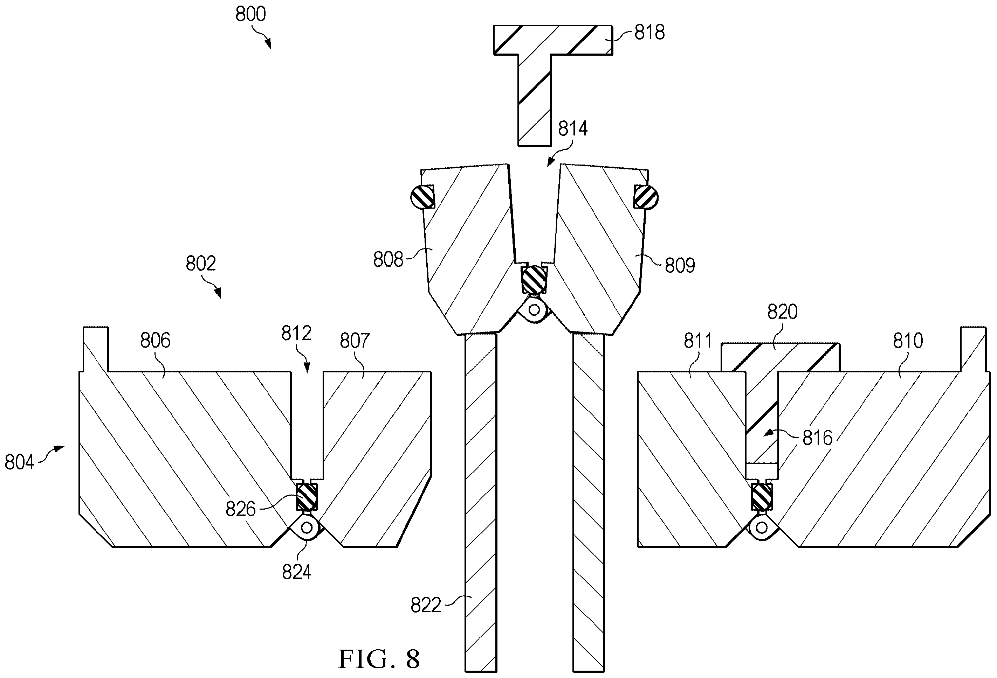

Turning now to **Figure 8****,** an illustration of a cross-sectional view of a resin infusion tooling system comprising a heating tool bed with a plurality of bed segments is depicted in accordance with an illustrative embodiment. In view **800,** plurality of bed segments **804** of heating tool bed **802** are actuated relative to each other to receive dry stringer preforms. Plurality of bed segments **804** comprises bed segment **806,** bed segment **807,** bed segment **808,** bed segment **809,** bed segment **810,** and bed segment **811.** In this illustrative example, a blade of dry stringer preform **820** is present in cavity **816** between bed segment **810** and bed segment **811.** In this illustrative example, each respective bed segment is hinged to another bed segment to allow for expansion of a respective cavity. Hinges **824** enable movement of bed segment **806** relative to bed segment **807.** Hinges **824** enable movement of bed segment **808** relative to bed segment **809.** Hinges **824** enable movement of bed segment **810** relative to bed segment **811.** In view **800,** bed segments are moved vertically relative to each other to allow for space to open respective cavities. In view **800,** bed segment **808** and bed segment **809** have been moved vertically by actuators **822** to enable opening cavity **814** to receive dry stringer preform **818.** In this illustrative example, cavity **812** is in net shape and has not yet received a dry stringer preform. After dry stringer preform **818** is placed into cavity **814,** bed segment **806** and bed segment **807** will be actuated to expand cavity **812** to receive a dry stringer preform.

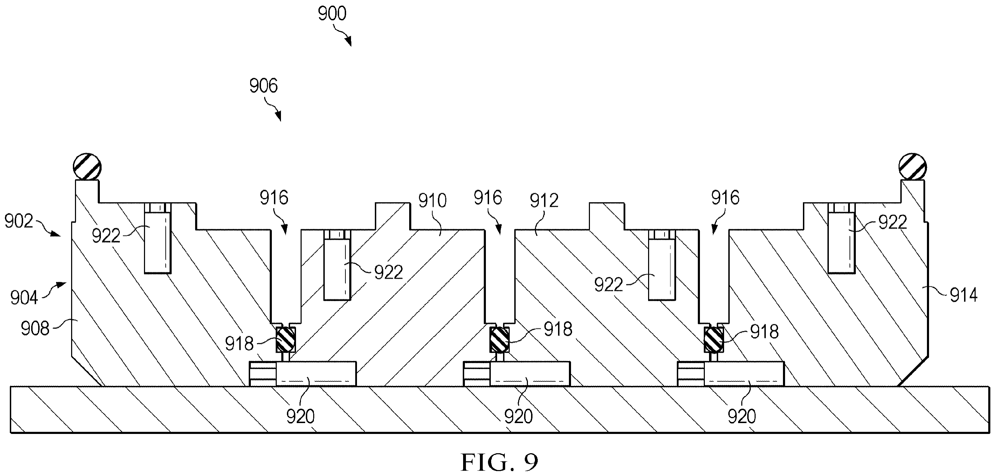

Turning now to **Figure 9****,** an illustration of a cross-sectional view of a resin infusion tooling system comprising a heating tool bed with a plurality of bed segments is depicted in accordance with an illustrative embodiment. Resin infusion tooling system **906** is a physical implementation of resin infusion tooling system **202** of **Figure 2****.** In view **900,** heating tool bed **902** comprises plurality of bed segments **904.** Plurality of bed segments **904** comprise bed segment **908,** bed segment **910,** bed segment **912,** and bed segment **914** that are laterally movable relative to each other. In view **900,** plurality of bed segments **904** are in a closed position. In the closed position, plurality of cavities **916** have a net shape for an aerospace part. In this illustrative example, plurality of seals **918** are present to seal plurality of bed segments **904** to each other and to a tool lid. In this illustrative example, lateral actuators **920** are present. Lateral actuators **920** enable movement of plurality of bed segments **904** relative to each other. Lateral actuators **920** enable movement of plurality of bed segments **904** to place heating tool bed **902** into an open position. Lateral actuators **920** enable movement of plurality of bed segments **904** to expand plurality of cavities **916** into an open position.

In this illustrative example, vertical actuators **922** are present in plurality of bed segments **904.** Vertical actuators **922** are provided to enable removal of a reinforced panel after resin infusing dry preforms.

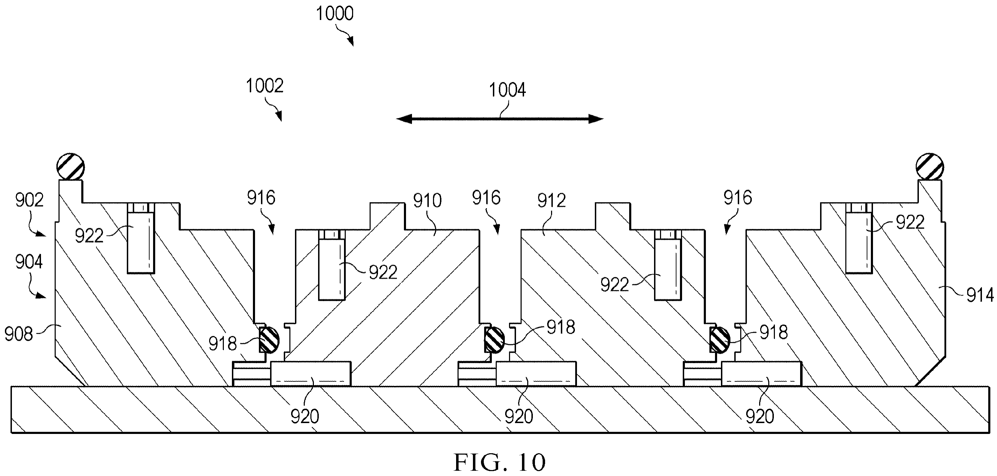

Turning now to **Figure 10****,** an illustration of a cross-sectional view of a resin infusion tooling system in an open position is depicted in accordance with an illustrative embodiment. In view **1000,** lateral actuators **920** have moved plurality of bed segments **904** in direction **1004** to place plurality of bed segments **904** in open position **1002.** Plurality of cavities **916** are expanded in open position **1002** in view **1000.**

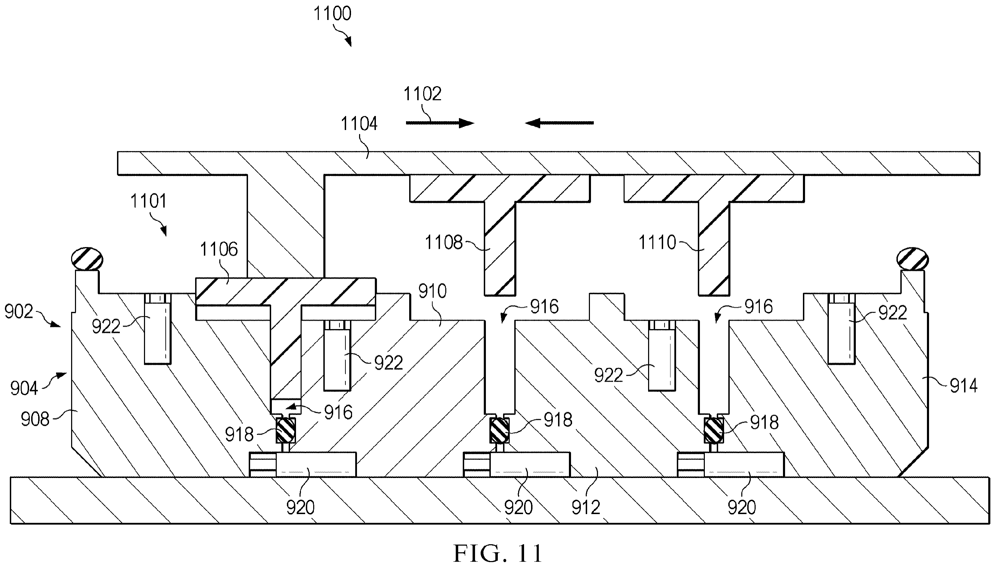

Turning now to **Figure 11****,** an illustration of a cross-sectional view of a resin infusion tooling system receiving dry stringer preforms is depicted in accordance with an illustrative embodiment. In view **1100,** pick and place tool **1104** is placing plurality of dry stringer preforms **1101** into plurality of cavities **916.** In view **1100,** dry stringer preform **1106** has been placed into a respective cavity of plurality of cavities **916.** After placing dry stringer preform **1106** into the respective cavity, a lateral actuator is used to move at least one of bed segment **908** or bed segment **910** relative to the other in direction **1102** to contract the respective cavity to a net shape.

In view **1100,** dry stringer preform **1108** and dry stringer preform **1110** have not yet been placed into respective cavities. In view **1100,** the cavities to receive dry stringer preform **1108** and dry stringer preform **1110** are still expanded.

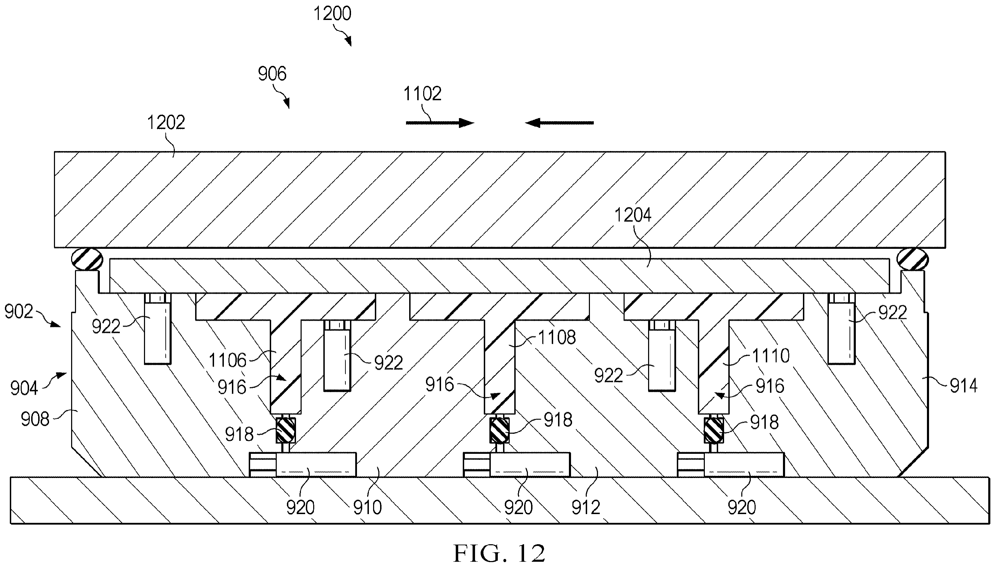

Turning now to **Figure 12****,** an illustration of a cross-sectional view of a resin infusion tooling system during resin infusion is depicted in accordance with an illustrative embodiment. In view **1200,** dry stringer preform **1108** and dry stringer preform **1110** have been positioned in respective cavities. Plurality of cavities **916** have been contracted to a net shape. Panel preform **1204** has been positioned over plurality of dry stringer preforms **1101** and heating tool bed **902.** Tool lid **1202** has been sealed to heating tool bed **902** to form a closed tool for performing resin infusion. In view **1200,** resin infusion is performed on panel preform **1204** and plurality of dry stringer preforms **1101.**

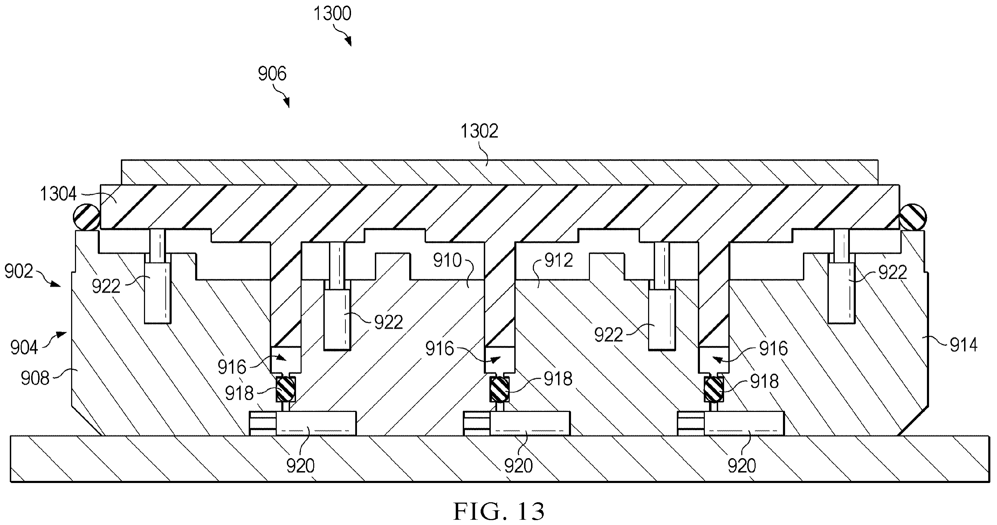

Turning now to **Figure 13****,** an illustration of a cross-sectional view of a resin infusion tooling system while a reinforced panel is removed is depicted in accordance with an illustrative embodiment. In view **1300,** resin infusion has been completed and tool lid **1202** has been removed. Pick and place tool **1302** is present to remove reinforced panel **1304** from resin infusion tooling system **906.** Additionally, vertical actuators **922** are used to lift reinforced panel **1304** away from heating tool bed **902.** In some illustrative examples, vertical actuators **922** are used to lift reinforced panel **1304** prior to lifting using pick and place tool **1302.** In some illustrative examples, vertical actuators **922** are used to lift reinforced panel **1304** substantially simultaneously to lifting using pick and place tool **1302.**

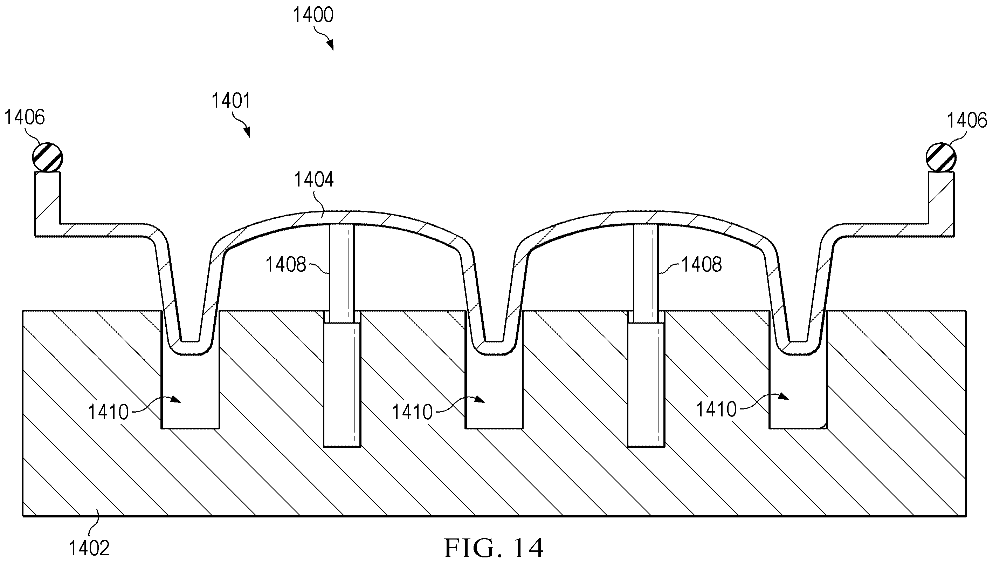

Turning now to **Figure 14****,** an illustration of a cross-sectional view of a resin infusion tooling system comprising a number of inserts is depicted in accordance with an illustrative embodiment. Resin infusion tooling system **1401** is a physical implementation of resin infusion tooling system **202** of **Figure 2****.**

Resin infusion tooling system **1401** comprises number of inserts **1404** and heating tool bed **1402.** In this illustrative example, heating tool bed **1402** is a unitary tool bed. In this illustrative example, plurality of cavities **1410** in heating tool bed **1402** maintain a size and shape.

Number of inserts **1404** comprises a unitary flexible insert. The unitary flexible insert comprises a material that can bend and flex to be inserted into plurality of cavities **1410.** In some illustrative examples, number of inserts **1404** comprises a flexible metal material. Plurality of seals **1406** are present on number of inserts **1404.** Plurality of seals **1406** are used to seal number of inserts **1404** to a tool lid for resin infusion.

In this illustrative example, vertical actuators **1408** are present in heating tool bed **1402.** Vertical actuators **1408** are configured to move number of inserts **1404** relative to heating tool bed **1402.** In some illustrative examples, vertical actuators **1408** are used to hold number of inserts **1404** above heating tool bed **1402** to receive dry stringer preforms. In some illustrative examples, vertical actuators **1408** are used to lift number of inserts **1404** out of plurality of cavities **1410** after a reinforced panel is removed from resin infusion tooling system **1401.**

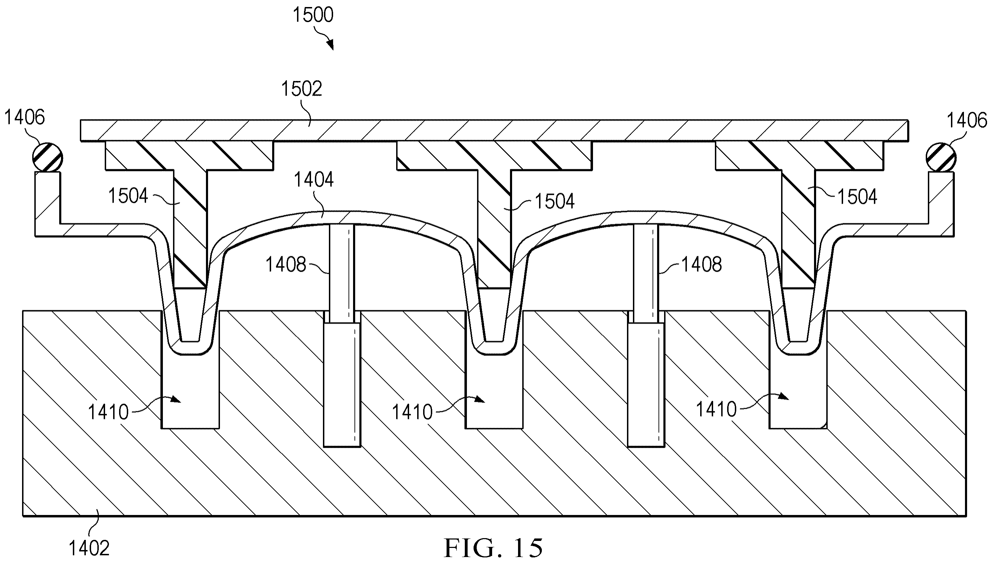

Turning now to **Figure 15****,** an illustration of a cross-sectional view of a resin infusion tooling system comprising a number of inserts receiving dry stringer preforms is depicted in accordance with an illustrative embodiment. In view **1500,** pick and place tool **1502** is simultaneously placing plurality of dry stringer preforms **1504** into cavities of number of inserts **1404.** In this illustrative example, vertical actuators **1408** hold number of inserts **1404** above heating tool bed **1402.**

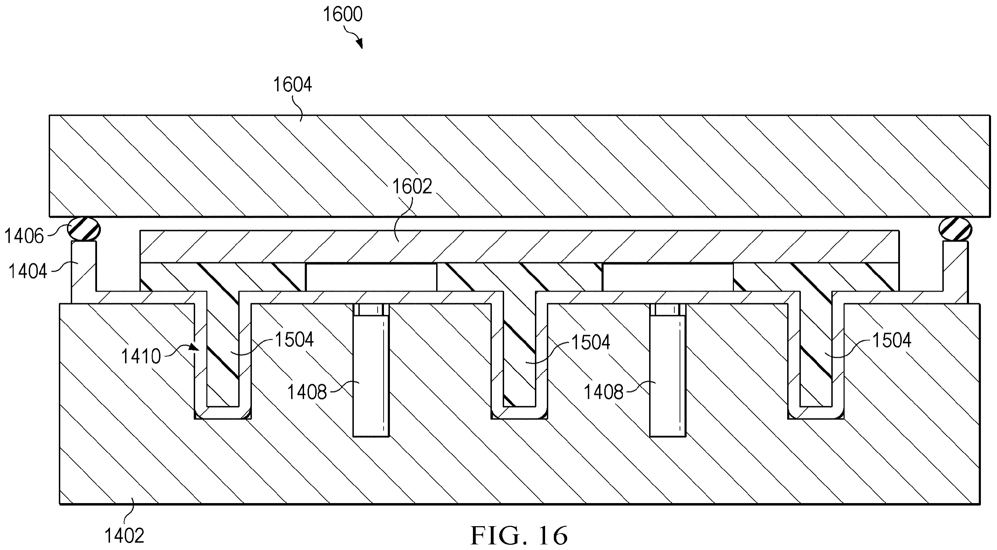

Turning now to **Figure 16****,** an illustration of a cross-sectional view of a resin infusion tooling system during resin infusion is depicted in accordance with an illustrative embodiment. In view **1600,** vertical actuators **1408** have been lowered and number of inserts **1404** has been inserted into plurality of cavities **1410.** Plurality of dry stringer preforms **1504** are present in cavities of number of inserts **1404.** Number of inserts **1404** hold plurality of dry stringer preforms **1504** in plurality of cavities **1410.** In view **1600,** panel preform **1602** is present over plurality of dry stringer preforms **1504.**

Tool lid **1604** has been sealed to number of inserts **1404** using plurality of seals **1406.** Sealing tool lid **1604** to number of inserts **1404** forms a resin infusion chamber containing plurality of dry stringer preforms **1504** and panel preform **1602.**

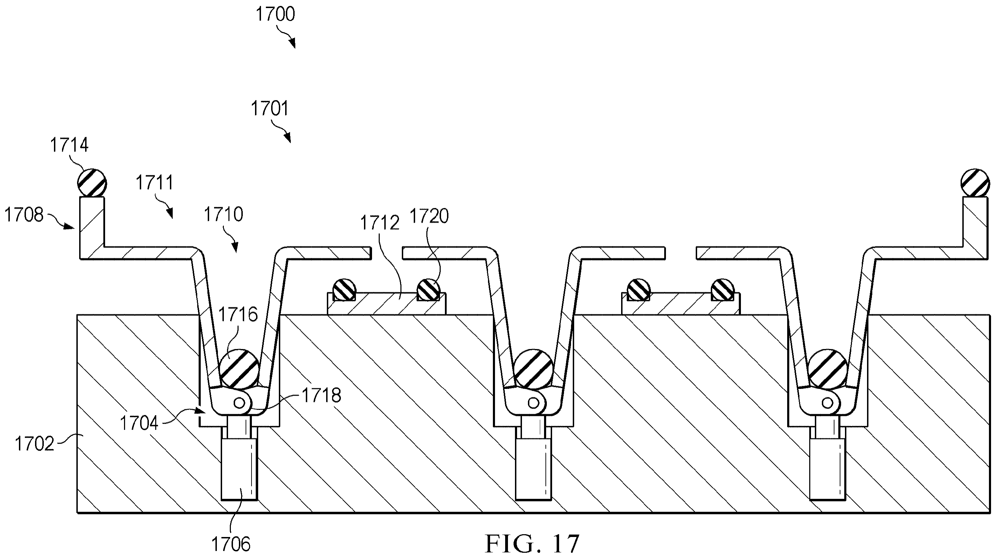

Turning now to **Figure 17****,** an illustration of a cross-sectional view of a resin infusion tooling system comprising a number of inserts is depicted in accordance with an illustrative embodiment. Resin infusion tooling system **1701** is a physical implementation of resin infusion tooling system **202** of **Figure 2****.**

In view **1700,** resin infusion tooling system **1701** comprises a heating tool bed **1702** comprising plurality of cavities **1704** and plurality of vertical actuators **1706.** Plurality of vertical actuators **1706** are configured to lift plurality of inserts **1708** to open plurality of cavities **1710** of stringer inserts **1711.** In this illustrative example, plurality of inserts **1708** comprises stringer inserts **1711** and panel inserts **1712.**

Stringer inserts **1711** are independently movable relative to each other. Stringer inserts **1711** are movable independently of panel inserts **1712.** Vertical actuators **1706** are used to independently move stringer inserts **1711** to receive dry stringer preforms and place the dry stringer preforms into plurality of cavities **1704.** Each of stringer inserts **1711** comprises a hinge of hinges **1718.** Hinges **1718** enable expansion of plurality of cavities **1710** of stringer inserts **1711.** Plurality of seals **1716** seal stringer inserts **1711** when inserted into plurality of cavities **1704.** Plurality of seals **1720** seal stringer inserts **1711** to panel inserts **1712.** Seals **1714** are configured to seal plurality of inserts **1708** to a tool lid to form a closed tool.

In resin infusion tooling system **1701,** plurality of inserts **1708** remain associated with heating tool bed **1702.** Stringer inserts **1711** are movable relative to heating tool bed **1702** but remain associated with plurality of cavities **1704.**

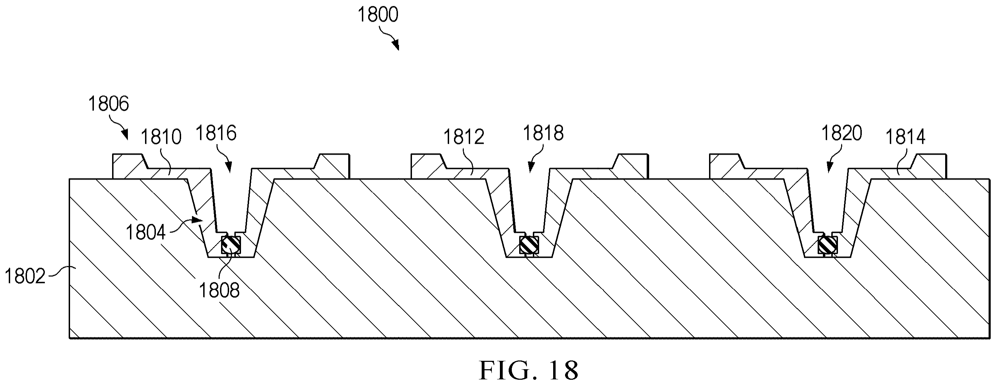

Turning now to **Figure 18****,** an illustration of a cross-sectional view of a resin infusion tooling system comprising a number of inserts is depicted in accordance with an illustrative embodiment. Number of inserts **1806** can be a physical implementation of number of inserts **206** of **Figure 2****.**

In this illustrative example, number of inserts **1806** is present on a separate forming tool **1802.** Forming tool **1802** is separate from a heating tool bed for resin infusion. Forming tool **1802** is present for number of inserts **1806** to receive a plurality of dry stringer preforms. In this illustrative example, number of inserts **1806** comprises stringer insert **1810** with cavity **1816,** stringer insert **1812** with cavity **1818,** and stringer insert **1814** with cavity **1820.** In this illustrative example, cavity **1816,** cavity **1818,** and cavity **1820** are expanded. In this illustrative example, each of stringer insert **1810,** stringer insert **1812,** and stringer insert **1814** comprise halves separated in view **1800.** Seals **1808** are present on number of inserts **1806.** Seals **1808** are positioned to seal together respective halves of stringer insert **1810,** stringer insert **1812,** and stringer insert **1814** during resin infusion.

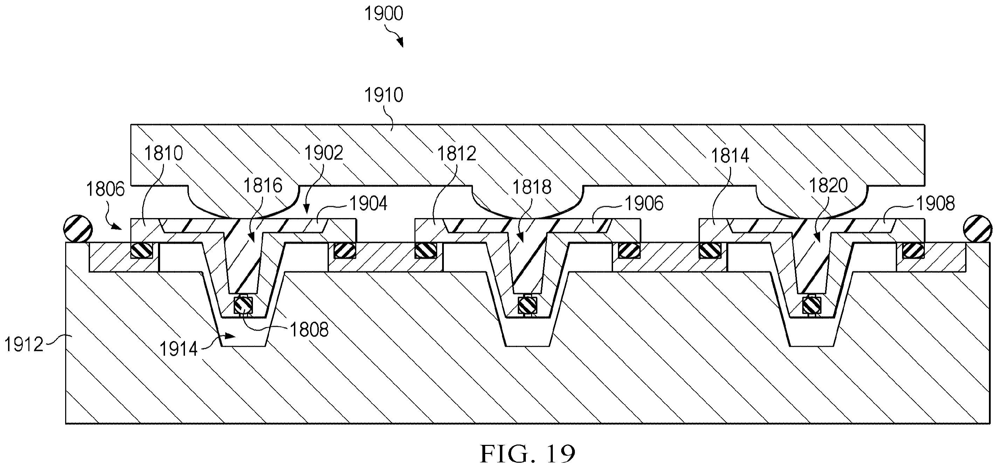

Turning now to **Figure 19****,** an illustration of a cross-sectional view of a resin infusion tooling system comprising a number of inserts is depicted in accordance with an illustrative embodiment. View **1900** is a view of number of inserts **1806** on heating tool bed **1912** during resin infusion. In view **1900,** plurality of dry stringer preforms **1902** have been inserted into number of inserts **1806** while number of inserts **1806** were on separate forming tool **1802.** In this illustrative example, blade of dry stringer preform **1904** is present in cavity **1816.** In this illustrative example, blade of dry stringer preform **1906** is present in cavity **1818.** In this illustrative example, blade of dry stringer preform **1908** is present in cavity **1820.** In this illustrative example, number of inserts **1806** are closed such that seals **1808** seal number of inserts **1806** together for resin infusion. In this illustrative example, pick and place tool **1910** picks and places plurality of dry stringer preforms **1902** and number of inserts **1806** together to place number of inserts into plurality of cavities **1914** of heating tool bed **1912.** Heating tool bed **1912** is used for resin infusion of plurality of dry stringer preforms **1902.**

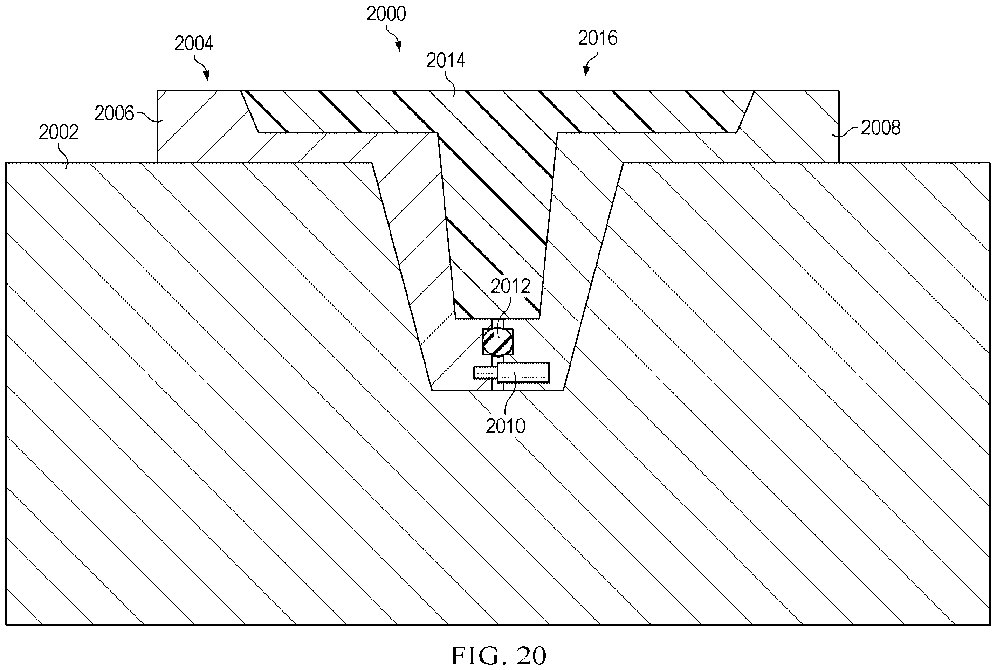

Turning now to **Figure 20****,** an illustration of a cross-sectional view of an insert of a resin infusion tooling system is depicted in accordance with an illustrative embodiment. Stringer insert **2004** can be a physical implementation of number of inserts **206** of **Figure 2****.** In view **2000,** a possible actuation method for stringer insert **2004** is discussed. The actuation described in view **2000** may be used in number of inserts **1806** of **Figures 18** and **19****.**

In view **2000,** separate forming tool **2002** supports stringer insert **2004.** Stringer insert **2004** comprises half **2006** and half **2008** movable relative to each other. In this illustrative example, dry stringer preform **2014** is present in cavity **2016** in stringer insert **2004.**

Stringer insert **2004** comprises lateral actuator **2010** and seal **2012.** In this illustrative example, stringer insert **2004** can be moved in any desirable fashion so that lateral actuator **2010** expands cavity **2016** of stringer insert **2004.** Seal **2012** seals half **2006** to half **2008** for resin infusion of dry stringer preform **2014.**

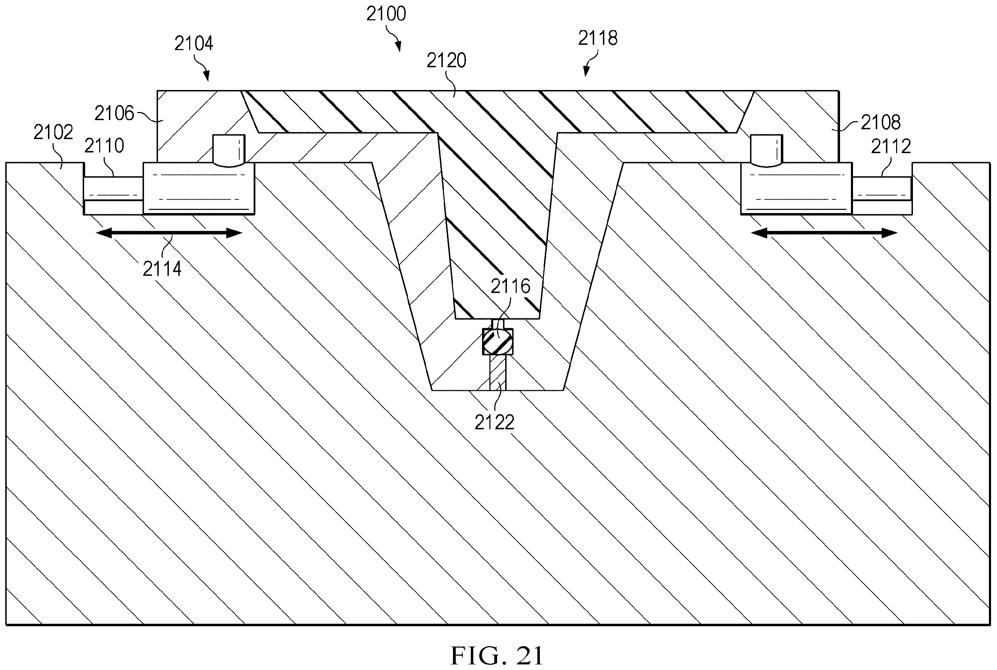

Turning now to **Figure 21****,** an illustration of a cross-sectional view of an insert of a resin infusion tooling system is depicted in accordance with an illustrative embodiment. Stringer insert **2104** can be a physical implementation of one insert of plurality of inserts **272** of **Figure 2****.** In view **2100,** a possible actuation method for stringer insert **2104** is discussed. The actuation described in view **2100** may be used in number of inserts **1806** of **Figures 18** and **19****.**

In view **2100,** forming tool **2102** supports stringer insert **2104.** Stringer insert **2104** comprises half **2106** and half **2108.** Actuators are present in forming tool **2102** to actuate stringer insert **2104** to expand or contract cavity **2118.** In this illustrative example, actuator **2110** is connected to forming tool **2102.** Actuator **2110** is configured to move half **2106** of stringer insert **2104.** Actuator **2112** is configured to move half **2108** of stringer insert **2104.** Actuator **2110** and actuator **2112** are configured to move half **2106** and half **2108** in direction **2114.** In this illustrative example, seal **2116** is present to seal half **2106** to half **2108** for resin infusion. Dry stringer preform **2120** is present in cavity **2118.**

Connector **2122** is present to maintain contact between half **2106** and half **2108** during transport of stringer insert **2104.** In some illustrative examples, connector **2122** takes the form of a magnet. Connector **2122** can maintain contact between half **2106** and half **2108** while dry stringer preform **2120** and stringer insert **2104** are picked and placed from forming tool **2102** to a heating tool bed.

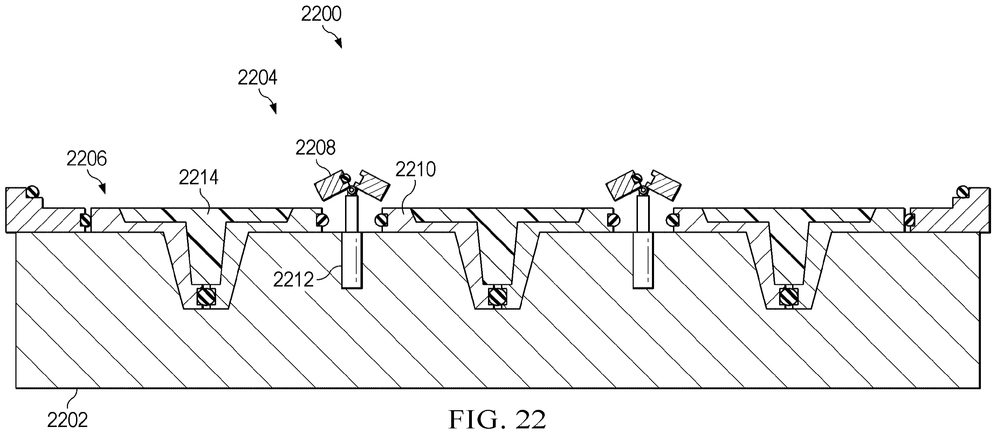

Turning now to **Figure 22****,** an illustration of a cross-sectional view of a resin infusion tooling system comprising a number of inserts is depicted in accordance with an illustrative embodiment. Resin infusion tooling system **2204** can be a physical implementation of resin infusion tooling system **202 of** **Figure 2****.** In view **2200** of resin infusion tooling system **2204,** heating tool base **2202** is a unitary heating tool base. Heating tool base **2202** comprises a plurality of cavities that remain the same size.

In this illustrative example, number of inserts **2206** is used to receive plurality of dry stringer preforms **2214** and hold plurality of dry stringer preforms **2214** in the cavities of heating tool base **2202.** Number of inserts **2206** comprises panel inserts **2208** and stringer inserts **2210.** Stringer inserts **2210** are configured to receive plurality of dry stringer preforms **2214.** Panel inserts **2208** are configured to support a panel preform. In this illustrative example, panel inserts **2208** are moved upwards by actuators **2212** to allow for movement of stringer inserts **2210.**

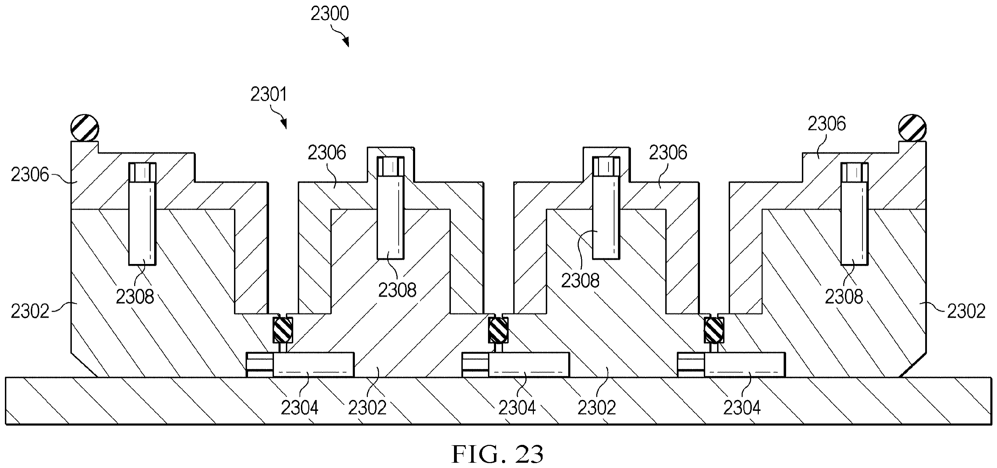

Turning now to **Figure 23****,** an illustration of a cross-sectional view of a resin infusion tooling system comprising a number of inserts is depicted in accordance with an illustrative embodiment. In view **2300,** resin infusion tooling system **2301** having plurality of bed segments **2302** and number of inserts **2306** is presented. Resin infusion tooling system **2301** can be a physical implementation of resin infusion tooling system **202** of **Figure 2****.** In view **2300,** actuators **2304** configured to move plurality of bed segments **2302** relative to each other are visible. Actuators **2304** can be activated to expand a plurality of cavities formed by plurality of bed segments **2302.**

Additionally, actuators **2308** configured to move number of inserts **2306** are visible. Actuators **2308** are configured to move number of inserts **2306** towards or away from plurality of bed segments **2302.**

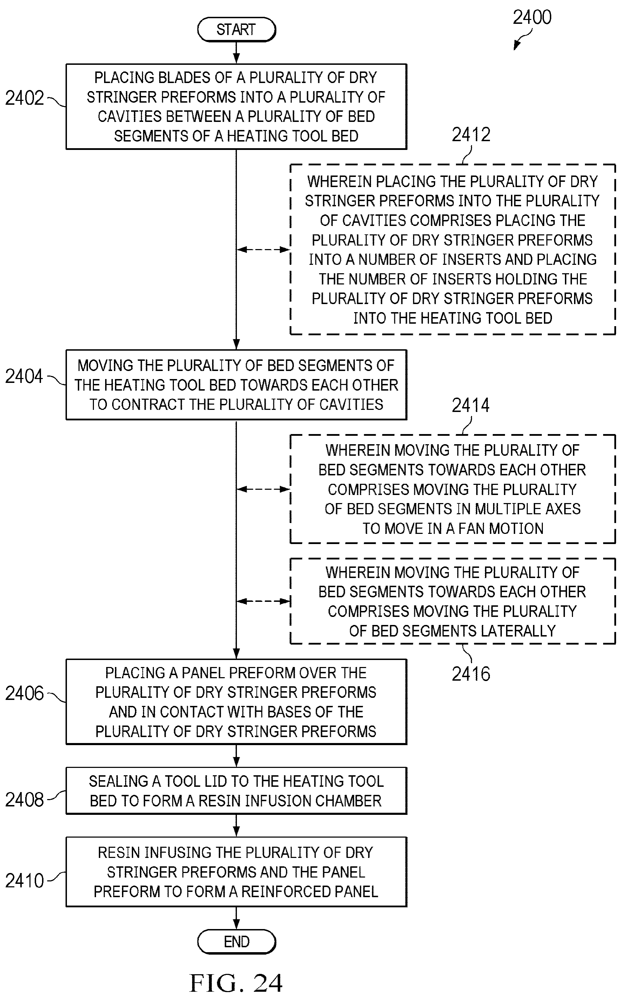

Turning now to **Figure 24****,** a flowchart of a method of performing resin infusion is depicted in accordance with an illustrative embodiment.

Method **2400** places blades of a plurality of dry stringer preforms into a plurality of cavities between a plurality of bed segments of a heating tool bed (operation **2402**). In some illustrative examples, the plurality of cavities are expandable and are referred to as a plurality of expandable cavities. Method **2400** moves the plurality of bed segments of the heating tool bed towards each other to contract the plurality of cavities (operation **2404**). Method **2400** places a panel preform over the plurality of dry stringer preforms and in contact with bases of the plurality of dry stringer preforms (operation **2406**). Method **2400** seals a tool lid to the heating tool bed to form a resin infusion chamber (operation **2408**).

Method **2400** resin infuses the plurality of dry stringer preforms and the panel preform to form a reinforced panel (operation **2410**). Afterwards, method **2400** terminates.

In some illustrative examples, moving the plurality of bed segments towards each other comprises moving the plurality of bed segments in multiple axes to move in a fan motion (operation **2414**). In some illustrative examples, bed segments are connected by hinges to provide a fan motion.

In some illustrative examples, moving the plurality of bed segments towards each other comprises moving the plurality of bed segments laterally (operation **2416**). In some illustrative examples, the bed segments are moved laterally by a plurality of lateral actuators.

In some illustrative examples, placing the plurality of dry stringer preforms into the plurality of cavities comprises placing the plurality of dry stringer preforms into a number of inserts and placing the number of inserts holding the plurality of dry stringer preforms into the heating tool bed (operation **2412**). In some illustrative examples, the number of inserts is made of a flexible material. In some illustrative examples, the number of inserts is made of a flexible metal. In some illustrative examples, the number of inserts comprises a plurality of inserts. In some illustrative examples, the number of inserts comprises a plurality of separable inserts. In some illustrative examples, the number of inserts comprises a plurality of separable inserts. In some illustrative examples, the number of inserts comprises stringer inserts and panel inserts.

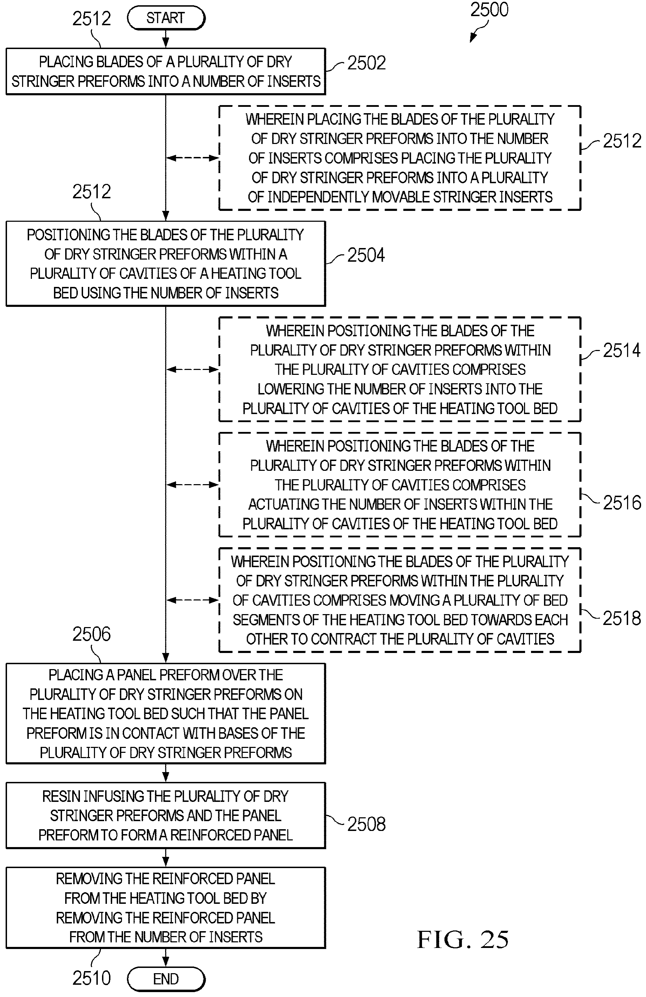

Turning now to **Figure 25****,** a flowchart of a method of performing resin infusion is depicted in accordance with an illustrative embodiment.

Method **2500** places blades of a plurality of dry stringer preforms into a number of inserts (operation **2502).** Method **2500** positions the blades of the plurality of dry stringer preforms within a plurality of cavities of a heating tool bed using the number of inserts (operation **2504**). Method **2500** places a panel preform over the plurality of dry stringer preforms on the heating tool bed such that the panel preform is in contact with bases of the plurality of dry stringer preforms (operation **2506**). Method **2500** resin infuses the plurality of dry stringer preforms and the panel preform to form a reinforced panel (operation **2508**). Method **2500** removes the reinforced panel from the heating tool bed by removing the reinforced panel from the number of inserts (operation **2510**). Afterwards, method **2500** terminates.

In some illustrative examples, the number of inserts is made of a flexible material. In some illustrative examples, the number of inserts is made of a flexible metal. In some illustrative examples, the number of inserts comprises a plurality of inserts. In some illustrative examples, the number of inserts comprises a plurality of separable inserts.

In some illustrative examples, placing the blades of the plurality of dry stringer preforms into the number of inserts comprises placing the plurality of dry stringer preforms into a plurality of independently movable stringer inserts (operation **2512**). In some illustrative examples, the number of inserts comprises stringer inserts and panel inserts. In some illustrative examples, the number of inserts comprises a plurality of separable inserts.

In some illustrative examples, positioning the blades of the plurality of dry stringer preforms within the plurality of cavities comprises lowering the number of inserts into the plurality of cavities of the heating tool bed (operation **2514**). In some illustrative examples, vertical actuators associated with a heating tool bed move the number of inserts vertically relative to the heating tool bed. In some illustrative examples, the number of inserts are picked and placed into the plurality of cavities while the plurality of dry stringer preforms are in the number of inserts.

In some illustrative examples, positioning the blades of the plurality of dry stringer preforms within the plurality of cavities comprises actuating the number of inserts within the plurality of cavities of the heating tool bed (operation **2516**). In some illustrative examples, lateral actuators are used to close the number of inserts to fit within the plurality of cavities.

In some illustrative examples, a plurality of inserts are used in conjunction with a plurality of bed segments. In some illustrative examples, positioning the blades of the plurality of dry stringer preforms within the plurality of cavities comprises moving a plurality of bed segments of the heating tool bed towards each other to contract the plurality of cavities (operation **2518**).

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C, or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **2414** through operation **2418** may be optional. As another example, operation **2512** through operation **2518** may be optional.

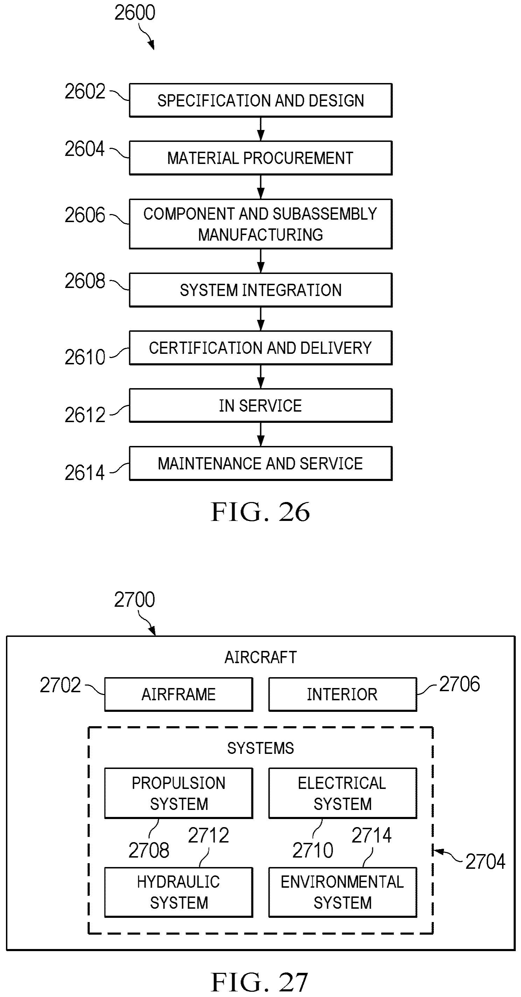

Illustrative embodiments of the present disclosure may be described in the context of aircraft manufacturing and service method **2600** as shown in **Figure 26** and aircraft **2700** as shown in **Figure 27****.** Turning first to **Figure 26****,** an illustration of an aircraft manufacturing and service method in a form of a block diagram is depicted in accordance with an illustrative embodiment. During pre-production, aircraft manufacturing and service method **2600** may include specification and design **2602** of aircraft **2700** in **Figure 27** and material procurement **2604.**

During production, component and subassembly manufacturing **2606** and system integration **2608** of aircraft **2700** takes place. Thereafter, aircraft **2700** may go through certification and delivery **2610** in order to be placed in service **2612.** While in service **2612** by a customer, aircraft **2700** is scheduled for routine maintenance and service **2614,** which may include modification, reconfiguration, refurbishment, or other maintenance and service.

Each of the processes of aircraft manufacturing and service method **2600** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 27****,** an illustration of an aircraft in a form of a block diagram is depicted in which an illustrative embodiment may be implemented. In this example, aircraft **2700** is produced by aircraft manufacturing and service method **2600** of **Figure 26** and may include airframe **2702** with plurality of systems **2704** and interior **2706.** Examples of systems **2704** include one or more of propulsion system **2708,** electrical system **2710,** hydraulic system **2712,** and environmental system **2714.** Any number of other systems may be included.

Apparatuses and methods embodied herein may be employed during at least one of the stages of aircraft manufacturing and service method **2600.** One or more illustrative embodiments may be manufactured or used during at least one of component and subassembly manufacturing **2606,** system integration **2608,** in service **2612,** or maintenance and service **2614** of **Figure 26****.**

The illustrative examples provide the ability to control the opening and closing of tooling surfaces to accommodate insertion of dry fiber preform into heated matched tooling without undesirable affects to preform/finished part or undesirable affects to the tooling surface. In some illustrative examples, the tooling surfaces are opened or closed by opening or closing a plurality of bed segments of the heating tool bed. In some illustrative examples, the tooling surfaces are opened or closed by opening or closing a number of inserts. In some illustrative examples, the number of inserts is bent or moved by bending a flexible material of the number of inserts. In some illustrative examples, the number of inserts are separable. In some illustrative examples, the number of inserts are hinged. In some illustrative examples, the number of inserts comprise stringer inserts. In some illustrative examples, the number of inserts comprise stringer inserts and panel inserts.

In some illustrative examples, there is separation of a matched tooling surface from a heated element which allows for faster, cheaper tooling replacement. In some illustrative examples, opening and closing matched tooling surfaces and integration of necessary seals enable gap infusion composite manufacturing. In some illustrative examples, making a matched tooling surface a removable feature allows for offline maintenance, easier and more cost efficient replacement, and a more robust solution that can more easily accommodate part design changes.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

The following numbered paragraphs disclose further aspects of the present invention.
1. A resin infusion tooling system comprising:
   a heating tool bed comprising a plurality of cavities formed between a plurality of bed segments movable relative to each other, wherein the plurality of cavities is expandable by movement of the plurality of bed segments relative to each other; and
   a plurality of seals configured to seal the plurality of bed segments together for resin infusion of a plurality of dry stringer preforms in the plurality of cavities.
2. The resin infusion tooling system of 1 further comprising:
   hinges connecting the plurality of bed segments to enable fanning movement of the plurality of bed segments relative to each other.
3. The resin infusion tooling system of 1 further comprising:
   lateral actuators configured to move the plurality of bed segments laterally relative to each other.
4. The resin infusion tooling system of any one of 1 to 3 further comprising:
   a number of inserts configured to receive the plurality of dry stringer preforms and hold the plurality of dry stringer preforms within the plurality of cavities.
5. A resin infusion tooling system comprising:
   a heating tool bed comprising a plurality of cavities configured to support a plurality of dry stringer preforms during resin infusion; and
   a number of inserts configured to receive the plurality of dry stringer preforms and hold the plurality of dry stringer preforms within the plurality of cavities.
6. The resin infusion tooling system of 5, wherein the number of inserts comprises a plurality of inserts comprising stringer inserts, wherein each insert unit of the stringer inserts has a respective cavity configured to receive a dry stringer preform of the plurality of dry stringer preforms.
7. The resin infusion tooling system of 6, wherein the stringer inserts comprise separable insert units with halves separable from each other.
8. The resin infusion tooling system of 6, wherein the stringer inserts comprise whole insert units with respective cavities expandable by hinges.
9. The resin infusion tooling system of any one of 6 to 8, wherein the plurality of inserts further comprise panel inserts positioned between the stringer inserts and configured to support a panel preform positioned over the stringer inserts and the panel inserts.
10. The resin infusion tooling system of 5, wherein the number of inserts comprises a unitary flexible insert with cavities configured to slide into the plurality of cavities of the heating tool bed.
11. The resin infusion tooling system of 5, wherein the heating tool bed comprises a plurality of bed segments movable relative to each other, wherein the plurality of cavities is expandable by movement of the plurality of bed segments relative to each other.
12. A method of performing resin infusion comprising:
   placing blades of a plurality of dry stringer preforms into a plurality of cavities between a plurality of bed segments of a heating tool bed;
   moving the plurality of bed segments of the heating tool bed towards each other to contract the plurality of cavities;
   placing a panel preform over the plurality of dry stringer preforms and in contact with bases of the plurality of dry stringer preforms;
   sealing a tool lid to the heating tool bed to form a resin infusion chamber; and
   resin infusing the plurality of dry stringer preforms and the panel preform to form a reinforced panel.
13. The method of 12, wherein moving the plurality of bed segments towards each other comprises moving the plurality of bed segments in multiple axes to move in a fan motion.
14. The method of 12, wherein moving the plurality of bed segments towards each other comprises moving the plurality of bed segments laterally.
15. The method of 12, wherein placing the plurality of dry stringer preforms into the plurality of cavities comprises placing the plurality of dry stringer preforms into a number of inserts and placing the number of inserts holding the plurality of dry stringer preforms into the heating tool bed.
16. A method of performing resin infusion comprising:
   placing blades of a plurality of dry stringer preforms into a number of inserts;
   positioning the blades of the plurality of dry stringer preforms within a plurality of cavities of a heating tool bed using the number of inserts;
   placing a panel preform over the plurality of dry stringer preforms on the heating tool bed such that the panel preform is in contact with bases of the plurality of dry stringer preforms;
   resin infusing the plurality of dry stringer preforms and the panel preform to form a reinforced panel; and
   removing the reinforced panel from the heating tool bed by removing the reinforced panel from the number of inserts.
17. The method of 16, wherein positioning the blades of the plurality of dry stringer preforms within the plurality of cavities comprises lowering the number of inserts into the plurality of cavities of the heating tool bed.
18. The method of 16, wherein positioning the blades of the plurality of dry stringer preforms within the plurality of cavities comprises actuating the number of inserts within the plurality of cavities of the heating tool bed.
19. The method of 16, wherein positioning the blades of the plurality of dry stringer preforms within the plurality of cavities comprises moving a plurality of bed segments of the heating tool bed towards each other to contract the plurality of cavities.
20. The method of 16, wherein placing the blades of the plurality of dry stringer preforms into the number of inserts comprises placing the plurality of dry stringer preforms into a plurality of independently movable stringer inserts.

## Claims

1. A resin infusion tooling system (202, 302, 906, 2301) comprising:
a heating tool bed (204, 303, 802, 902) comprising a plurality of cavities (208, 314, 916) formed between a plurality of bed segments (210, 304, 804, 904, 2302) movable relative to each other, wherein the plurality of cavities (208, 314, 916) is expandable by movement of the plurality of bed segments (210, 304, 804, 904, 2302) relative to each other; and
a plurality of seals (224, 322) configured to seal the plurality of bed segments (210, 304, 804, 904, 2302) together for resin infusion (256) of a plurality of dry stringer preforms (246, 503, 1101, 1504, 1902, 2214) in the plurality of cavities (208, 314, 916).

2. The resin infusion tooling system (202, 302, 906, 2301) of claim 1 further comprising:
hinges (232, 328, 824) connecting the plurality of bed segments (210, 304, 804, 904, 2302) to enable fanning movement of the plurality of bed segments (210, 304, 804, 904, 2302) relative to each other, or
lateral actuators (234, 920) configured to move the plurality of bed segments (210, 304, 804, 904, 2302) laterally relative to each other.

3. The resin infusion tooling system (202, 302, 906, 2301) of claim 1 or 2 further comprising:
a number of inserts (206, 1404, 1806) configured to receive the plurality of dry stringer preforms (246, 503, 1101, 1504, 1902, 2214) and hold the plurality of dry stringer preforms (246, 503, 1101, 1504, 1902, 2214) within the plurality of cavities (208, 314, 916).

4. A resin infusion tooling system (202, 1401, 1701, 2204, 2301) comprising:
a heating tool bed (204, 1402, 1702, 1912) comprising a plurality of cavities (208, 314, 916, 1410, 1704, 1914) configured to support a plurality of dry stringer preforms (246, 503, 1101, 1504, 1902, 2214) during resin infusion (256); and
a number of inserts (206, 1404, 1806) configured to receive the plurality of dry stringer preforms (246, 503, 1101, 1504, 1902, 2214) and hold the plurality of dry stringer preforms (246, 503, 1101, 1504, 1902, 2214) within the plurality of cavities (208, 314, 916, 1410, 1704, 1914).

5. The resin infusion tooling system (202, 1401, 1701, 2204, 2301) of claim 4, wherein the number of inserts (206, 1404, 1806) comprises a plurality of inserts (208) comprising stringer inserts (274, 1711, 2210), wherein each insert unit of the stringer inserts (274, 1711, 2210) has a respective cavity configured to receive a dry stringer preform of the plurality of dry stringer preforms (246, 503, 1101, 1504, 1902, 2214).

6. The resin infusion tooling system (202, 1401, 1701, 2204, 2301) of claim 5,
wherein the stringer inserts (274, 1711, 2210) comprise separable insert units (276) with halves separable from each other; or
wherein the stringer inserts (274, 1711, 2210) comprise whole insert units (288) with respective cavities expandable by hinges (232, 328, 824).

7. The resin infusion tooling system (202, 1401, 1701, 2204, 2301) of claim 5 or 6, wherein the plurality of inserts (208) further comprise panel inserts (296, 1712, 2208) positioned between the stringer inserts (274, 1711, 2210) and configured to support a panel preform (254) positioned over the stringer inserts (274, 1711, 2210) and the panel inserts (296, 1712, 2208).

8. The resin infusion tooling system (202, 1401, 1701, 2204, 2301) of claim 4, wherein the number of inserts (206, 1404, 1806) comprises a unitary flexible insert (266) with cavities configured to slide into the plurality of cavities (208, 314, 916, 1410, 1704, 1914) of the heating tool bed (204, 1402, 1702, 1912).

9. The resin infusion tooling system (202, 1401, 1701, 2204, 2301) of claim 4, wherein the heating tool bed (204, 303, 802, 902) comprises a plurality of bed segments (210, 304, 804, 904, 2302) movable relative to each other, wherein the plurality of cavities (208, 314, 916) is expandable by movement of the plurality of bed segments (210, 304, 804, 904, 2302) relative to each other.

10. A method (2400) of performing resin infusion (256) comprising:
placing (2402) blades (253) of a plurality of dry stringer preforms (246, 503, 1101, 1504, 1902, 2214) into a plurality of cavities (208, 314, 916) between a plurality of bed segments (210, 304, 804, 904, 2302) of a heating tool bed (204, 303, 802, 902);
moving (2404) the plurality of bed segments (210, 304, 804, 904, 2302) of the heating tool bed (204, 303, 802, 902) towards each other to contract the plurality of cavities (208, 314, 916);
placing (2406) a panel preform (254) over the plurality of dry stringer preforms (246, 503, 1101, 1504, 1902, 2214) and in contact with bases of the plurality of dry stringer preforms (246, 503, 1101, 1504, 1902, 2214);
sealing (2408) a tool lid to the heating tool bed (204, 303, 802, 902) to form a resin infusion (256) chamber; and
resin infusing (2410) the plurality of dry stringer preforms (246, 503, 1101, 1504, 1902, 2214) and the panel preform (254) to form a reinforced panel (260).

11. The method (2400) of claim 10,
wherein (2414) moving the plurality of bed segments (210, 304, 804, 904, 2302) towards each other comprises moving the plurality of bed segments (210, 304, 804, 904, 2302) in multiple axes to move in a fan motion; or
wherein (2416) moving the plurality of bed segments (210, 304, 804, 904, 2302) towards each other comprises moving the plurality of bed segments (210, 304, 804, 904, 2302) laterally.

12. The method (2400) of claim 10, wherein (2412) placing the plurality of dry stringer preforms (246, 503, 1101, 1504, 1902, 2214) into the plurality of cavities (208, 314, 916) comprises placing the plurality of dry stringer preforms (246, 503, 1101, 1504, 1902, 2214) into a number of inserts (206, 1404, 1806) and placing the number of inserts (206, 1404, 1806) holding the plurality of dry stringer preforms (246, 503, 1101, 1504, 1902, 2214) into the heating tool bed (204, 303, 802, 902).

13. A method (2500) of performing resin infusion (256) comprising:
placing (2502) blades (253) of a plurality of dry stringer preforms (246, 503, 1101, 1504, 1902, 2214) into a number of inserts (206, 1404, 1806);
positioning (2504) the blades (253) of the plurality of dry stringer preforms (246, 503, 1101, 1504, 1902, 2214) within a plurality of cavities (208, 314, 916, 1410, 1704, 1914) of a heating tool bed (204, 1402, 1702, 1912) using the number of inserts (206, 1404, 1806);
placing (2506) a panel preform (254) over the plurality of dry stringer preforms (246, 503, 1101, 1504, 1902, 2214) on the heating tool bed (204, 1402, 1702, 1912) such that the panel preform (254) is in contact with bases of the plurality of dry stringer preforms (246, 503, 1101, 1504, 1902, 2214);
resin infusing (2508) the plurality of dry stringer preforms (246, 503, 1101, 1504, 1902, 2214) and the panel preform (254) to form a reinforced panel (260); and
removing (2510) the reinforced panel (260) from the heating tool bed (204, 1402, 1702, 1912) by removing the reinforced panel (260) from the number of inserts (206, 1404, 1806).

14. The method (2500) of claim 13,
wherein (2514) positioning the blades (253) of the plurality of dry stringer preforms (246, 503, 1101, 1504, 1902, 2214) within the plurality of cavities (208, 314, 916, 1410, 1704, 1914) comprises lowering the number of inserts (206, 1404, 1806) into the plurality of cavities (208, 314, 916, 1410, 1704, 1914) of the heating tool bed (204, 1402, 1702, 1912); or
wherein (2516) positioning the blades (253) of the plurality of dry stringer preforms (246, 503, 1101, 1504, 1902, 2214) within the plurality of cavities (208, 314, 916, 1410, 1704, 1914) comprises actuating the number of inserts (206, 1404, 1806) within the plurality of cavities (208, 314, 916, 1410, 1704, 1914) of the heating tool bed (204, 1402, 1702, 1912); or
wherein (2518) positioning the blades (253) of the plurality of dry stringer preforms (246, 503, 1101, 1504, 1902, 2214) within the plurality of cavities (208, 314, 916, 1410, 1704, 1914) comprises moving a plurality of bed segments (210, 304, 804, 904, 2302) of the heating tool bed (204, 303, 802, 902) towards each other to contract the plurality of cavities (208, 314, 916).

15. The method (2500) of claim 13, wherein (2512) placing the blades (253) of the plurality of dry stringer preforms (246, 503, 1101, 1504, 1902, 2214) into the number of inserts (206, 1404, 1806) comprises placing the plurality of dry stringer preforms (246, 503, 1101, 1504, 1902, 2214) into a plurality of independently movable stringer inserts (274, 1711, 2210).
